# FASCICULE DE BREVET EUROPEEN

(11) **EP 3 140 176 B1**
(45) Date de publication et mention de la délivrance du brevet: **18.07.2018**
(21) Numéro de dépôt: 15715792.6
(22) Date de dépôt: 18.03.2015
(51) Int. Cl.: B62D 21/15, B62D 25/08

(54) **VEHICULE AUTOMOBILE AVEC CRASHBOX A RUPTURE PROGRAMMEE EN CAS D'IMPACT AVANT**
KRAFTFAHRZEUG MIT CRASHBOX MIT PLANMÄSSIGER BREMSUNG BEI EINEM FRONTALAUFPRALL
MOTOR VEHICLE HAVING A CRASH BOX WITH SCHEDULED BREAKING IN THE EVENT OF A FRONTAL IMPACT

(30) Priorité: 04.04.2014 FR 1453027
(43) Date de publication de la demande: 15.03.2017
(73) Titulaire: PSA Automobiles SA, 78300 Poissy (FR)
(72) Inventeur: PERU, Marc, F-92290 Chatenay-Malabry (FR); ZEITOUNI, Richard, F-78390 Bois D Arcy (FR)
(86) Numéro de dépôt international: PCT/FR2015/050667
(87) Numéro de publication internationale: WO 2015/150656

(56) Documents cités:
- WO-A1-2014/007403
- WO-A1-2014/042041
- DE-A1-102009 053 369
- US-A1- 2009 146 455

## Description

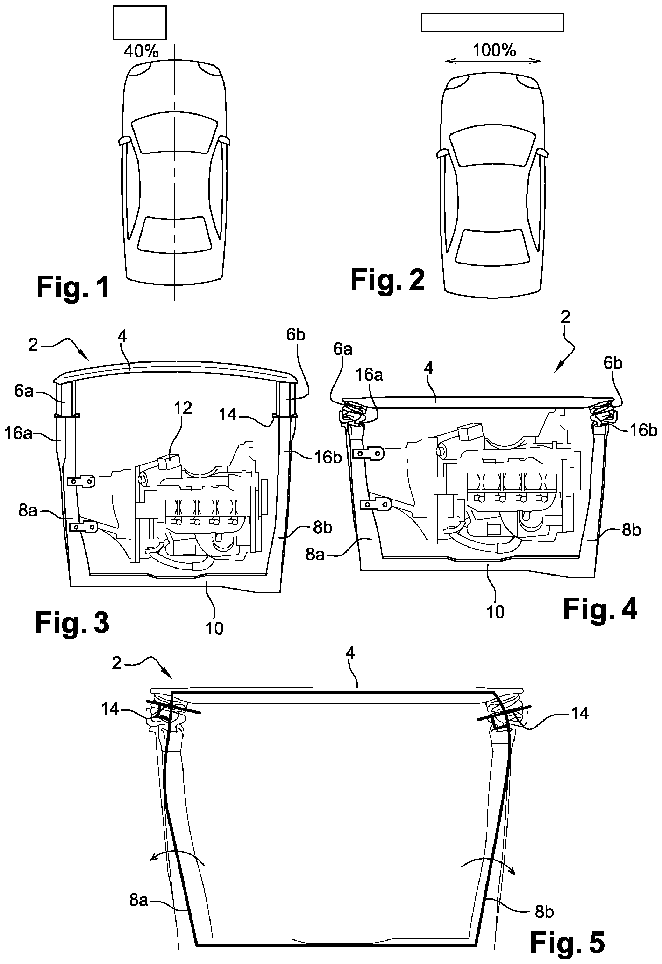

L'invention a trait à l'absorption de chocs à l'avant d'un véhicule automobile. Plus particulièrement, l'invention a trait à une structure avant de véhicule ainsi qu'à un véhicule apte à absorber des chocs avant. Le document DE 10 2009 053 369 A1 divulgue une structure avant de véhicule automobile selon le préambule de la revendication 1. Un système ou dispositif d'absorption de chocs avant pour véhicule est classiquement constitué d'une poutre transversale fixée à deux profilés déformables en compression et couramment appelés « crashboxes ». Ces profilés déformables peuvent comprendre, chacun, une platine de fixation à la tête de brancard de la structure du véhicule. Les brancards sont les deux profilés structurels s'étendant parallèlement l'un à l'autre le long de la structure du véhicule. Les profilés déformables ou « crashboxes » sont conçus pour pouvoir se déformer en formant des plis à la manière d'un accordéon. Ce type de déformation est également couramment désigné « bottelage » dans la mesure où les profilés prennent une forme annelée après déformation qui ressemble à des bottes de foin liées.
Un dispositif d'absorption de chocs avant pour véhicule doit satisfaire à de nombreuses prestations, notamment des tests de choc frontal.
Parmi ces tests, on compte un test de choc frontal à 64 km/h avec recouvrement partiel contre une barrière composée d'une structure complexe, qui représente la déformation «théorique» d'un bloc avant de voiture venant en sens inverse. Elle se compose notamment de panneaux en nid d'abeille. La figure 1 illustre ce test de choc. Le protocole est celui qui est utilisé actuellement par l'organisme European New Car Assessment Program (Euro NCAP). Ce test est à satisfaire aussi bien du côté gauche que du côté droit.
Un nouveau protocole de choc frontal à 50 km/h et 56 km/h avec 100% de recouvrement contre un mur rigide est en préparation. Il est susceptible d'être introduit dans le protocole Euro NCAP d'ici 2015. Ce test est illustré à la figure 2.
Il est donc souhaitable de satisfaire à ces deux protocoles de chocs frontaux.
A l'occasion du choc décalé à 40%, un seul côté du véhicule heurte l'obstacle et l'obstacle est par ailleurs déformable. Le fait de devoir absorber toute l'énergie du choc sur le seul côté impacté accentue le risque d'intrusions à l'intérieur de l'habitacle de ce côté. En revanche, la déformation de la barrière filtre la décélération subie par le véhicule, que l'on peut traiter avec les moyens de retenue des occupants selon l'état de la technique.
A l'occasion d'un choc sans décalage sur un mur rigide, les deux côtés du véhicule travaillent de manière simultanée. L'énergie du choc est plus rapidement absorbée du fait de la raideur double représentée par les deux côtés du véhicule. De plus, l'impact est contre un mur rigide. La décélération subie par le véhicule est donc plus importante. La difficulté avec ce protocole se concentre essentiellement sur la loi de décélération du véhicule.
L'invention a pour objectif de proposer un dispositif d'absorption de chocs avant pour véhicule qui puisse satisfaire aux deux tests susmentionnés, plus particulièrement au test de choc frontal avec recouvrement de 40% sur un obstacle déformable et au test de choc frontal avec recouvrement total sur obstacle rigide.
L'invention a pour objet une structure avant de véhicule automobile comprenant deux profilés structurels longitudinaux s'étendant de manière essentiellement parallèle à l'avant du véhicule; deux profilés déformables, s'étendant, respectivement, dans le prolongement avant des profilés structurels et fixés à leur extrémité avant via des moyens de fixation; une poutre transversale galbée fixée aux extrémités avant des profilés déformables, remarquable en ce que les moyens de fixation d'un des profilés déformables au profilé structurel correspondant sont configurés pour permettre un déplacement transversal, vers l'extérieur, de l'extrémité arrière dudit profilé déformable par rapport à l'extrémité avant du profilé structurel, en cas d'impact sur la poutre galbée, de manière à engendrer une déformation latérale, vers l'extérieur, de l'extrémité avant du profilé structurel correspondant.
La poutre transversale comprend une partie centrale galbée dépassant longitudinalement vers l'avant ses parties latérales d'au moins 20mm, préférentiellement 40mm, plus préférentiellement 60mm, plus préférentiellement encore 80mm.

Selon l'invention, les moyens de fixation du profilé déformable destiné à se déplacer par rapport au profilé structurel correspondant comprennent un ou plusieurs orifices oblongs orientés selon une direction transversale et une vis engageant ledit orifice ou chacun desdits orifices, respectivement.

Selon un mode avantageux de l'invention, le profilé déformable destiné à se déplacer et le profilé structurel correspondant comprennent chacun une platine de fixation, l'orifice oblong ou au moins un des orifices oblongs étant réalisé dans au moins une desdites platines de fixation, la ou les desdites platines de fixation étant préférentiellement en aluminium.

Selon un mode avantageux de l'invention, la ou chacune des vis engageant le ou chacun des orifices oblongs est serrée selon un couple de serrage de manière à permettre le déplacement de l'extrémité arrière du profilé déformable au cours de la déformation de la poutre transversale galbée.

Selon un mode avantageux de l'invention, la ou chacune des vis est de diamètre de 6mm à 10mm.

Avantageusement, la ou chacune des vis est serrée selon un couple de serrage compris entre 20Nm et 40Nm.

Selon un mode avantageux de l'invention, l'orifice oblong ou au moins un des orifices oblong est situé en bordure de la platine, à une distance de chacun des bords de la platine de moins de 5 % de la plus grande dimension de la platine, au moins un des orifices oblongs étant débouchant sur la bordure de la platine.

Selon un mode avantageux de l'invention, la platine du profilé déformable comprend quatre orifices de fixation, chacun des orifices étant oblong.

Selon un mode avantageux de l'invention, la platine du profilé déformable comprend deux orifices de fixation débouchant sur la bordure de la platine.

Selon un mode avantageux de l'invention, l'autre des deux profilés déformables est vierge de moyens de fixation configurés pour permettre un déplacement transversal vers l'extérieur dudit profilé par rapport au profilé structurel correspondant, ledit profilé étant préférentiellement du côté conducteur du véhicule.

Selon un mode avantageux de l'invention, la structure avant comprend, en outre, une pièce disposée entre les platines de fixation du profilé déformable destiné à se déplacer et du profilé structurel correspondant, ladite pièce étant préférentiellement un support de traverse de façade.

Selon un mode avantageux de l'invention, la longueur de l'orifice oblong ou de chacun des orifices oblongs, selon la direction oblongue, est comprise entre 1, 5 et 3 fois le diamètre de la vis de fixation.

Selon un mode avantageux de l'invention, la longueur de l'orifice oblong ou de chacun des orifices oblongs, selon la direction oblongue, est comprise entre 9mm et 30mm.

Selon un mode avantageux de l'invention, l'orifice oblong ou chacun des orifices oblongs comprend une portion de section inférieure au diamètre de la vis de fixation, ladite portion s'étendant sur au moins 30%, préférentiellement au moins 50%, de la longueur de l'orifice oblong. La portion de section inférieure est avantageusement située du côté de l'orifice oblong qui correspond au côté intérieur du véhicule.

Selon un mode avantageux de l'invention, la portion de section inférieure est d'une valeur comprise entre 6mm et 10mm.

L'invention a également pour objet un véhicule automobile, remarquable en ce qu'il comprend une structure avant conforme à l'invention.

Les mesures de l'invention sont intéressantes en ce qu'elles permettent à la structure avant de satisfaire les deux tests décrits dans la partie relative à la technique antérieure, et ce avec des moyens simples et économiques. Elles permettent de conserver le comportement du côté conducteur en choc décalé côté conducteur. Le comportement du deuxième profilé structurel longitudinal (brancard), en l'occurrence celui du côté conducteur, reste en effet inchangé. Il a été optimisé pour le protocole de choc décalé côté conducteur, en l'occurrence côté gauche. Les orifices oblongs ne remettent en cause ni les interfaces d'architecture du véhicule, ni sa structure au niveau du ferrage.

D'autres caractéristiques et avantages de la présente invention seront mieux compris à l'aide de la description et des dessins parmi lesquels :
- La figure 1 illustre les conditions de test de choc frontal à 64 km/h, avec 40% de recouvrement contre une barrière déformable ;
- La figure 2 illustre les conditions de test de choc frontal à 50 km/h et 56 km/h avec 100% de recouvrement contre un mur rigide ;
- La figure 3 est une vue en élévation d'une structure avant déformable classique de véhicule automobile, à l'état non déformé ;
- La figure 4 illustre la structure déformable de la figure 3, à l'état déformé après un impact avec 100% de recouvrement ;
- La figure 5 illustre la fibre neutre de la structure déformée de la figure 4 ;
- La figure 6 est une vue en perspective de trois quart arrière du profilé déformable de droite de la structure avant conforme à l'invention ;
- La figure 7 est une vue de dessus de la structure avant conforme à l'invention, face à une paroi de choc frontal à recouvrement total ;
- La figure 8 est une vue du profilé déformable droit de la structure de la figure 7, au début de la déformation après impact avant ;
- La figure 9 est une vue en coupe transversale IX-IX de la platine du profilé déformable de la figure 8 ;
- La figure 10 est une vue du profilé déformable droit de la structure de la figure 7, au stade intermédiaire de la déformation de la structure avant ;
- La figure 11 est une vue en coupe transversale XI-XI de la platine du profilé déformable au stade intermédiaire de la déformation de la structure ;
- La figure 12 est une vue du profilé structurel longitudinal droit en fin de déformation de la structure.

Les figures 1 et 2 ont déjà été décrites précédemment dans le cadre de la discussion de l'art antérieur.

Les figures 3 à 5 illustrent la déformation d'une structure avant déformable classique d'un véhicule automobile lors d'un choc avant avec recouvrement total ou essentiellement total. Plus précisément, la figure 3 illustre la structure à l'état non déformé, la figure 4 illustre la structure à l'état déformé suite au choc et la figure 5 illustre la fibre neutre de la structure déformée selon la figure 4.

A la figure 3, la structure avant 2 de véhicule automobile comprend, essentiellement, une poutre transversale avant 4, soutenue à ses deux extrémités, par deux profilés déformables (6a, 6b), communément appelés « crashboxes ». Ces profilés sont conçus pour pouvoir se déformer en formant des plis à la manière d'un accordéon, cette déformation étant également couramment désignée « bottelage ». La structure 2 comprend également deux profilés structurels longitudinaux parallèles 8a et 8b supportant les profilés déformables 6a et 6b et la poutre transversale 4. Ces profilés 8a et 8b sont communément appelés « brancards ». Une poutre transversale arrière 10 relie les deux profilés 8a et 8b. Chacun de ces profilés comprend, à sa tête ou extrémité avant, une platine de fixation 14, destinée à assurer la liaison avec les profilés déformables 6a et 6b. Les portions avant 16a et 16b des profilés structurels longitudinaux 8a et 8b sont également conçues pour se déformer ou « botteler » en formant des plis à la manière d'un accordéon. Un groupe motopropulseur 12 est disposé, en l'occurrence de manière transversale, entre les deux profilés structurels longitudinaux 8a et 8b.

La figure 4 illustre la structure 2 de la figure 3 à l'état déformé suite à un choc frontal avec recouvrement total du type illustré à la figure 2. On peut observer que la poutre transversale avant 4 initialement galbée est maintenant totalement droite et s'est déplacée vers l'arrière. On peut également observer que les profilés déformables (« crashboxes ») sont complètement déformés en compression sans dévers. On peut également observer que les portions avant (16a, 16b) des profilés structurels longitudinaux (8a, 8b) sont également déformées en compression sans dévers. Le reste des profilés structurels longitudinaux (8a, 8b) est resté essentiellement intact. En d'autres termes, cela signifie que la quasi-totalité de l'énergie du choc est absorbée par le « bottelage » des profilés déformables (6a, 6b) et par les portions avant (16a, 16b) des profilés structurels longitudinaux (8a, 8b).

La figure 5 illustre la fibre neutre de la structure 2 après déformation selon la figure 4. On peut observer que les profilés longitudinaux (8a, 8b) ont tendance à fléchir vers l'extérieur suivant les flèches représentées. Dans le cadre de ce mouvement de flexion des profilés, on peut également observer les mouvements de rotation des platines de fixation 14 qui conservent leur orientation par rapport à la fibre neutre des profilés (8a, 8b). Toujours dans le cadre de ce mouvement de flexion des profilés, la poutre transversale avant 4 se voit alors sollicitée en traction.

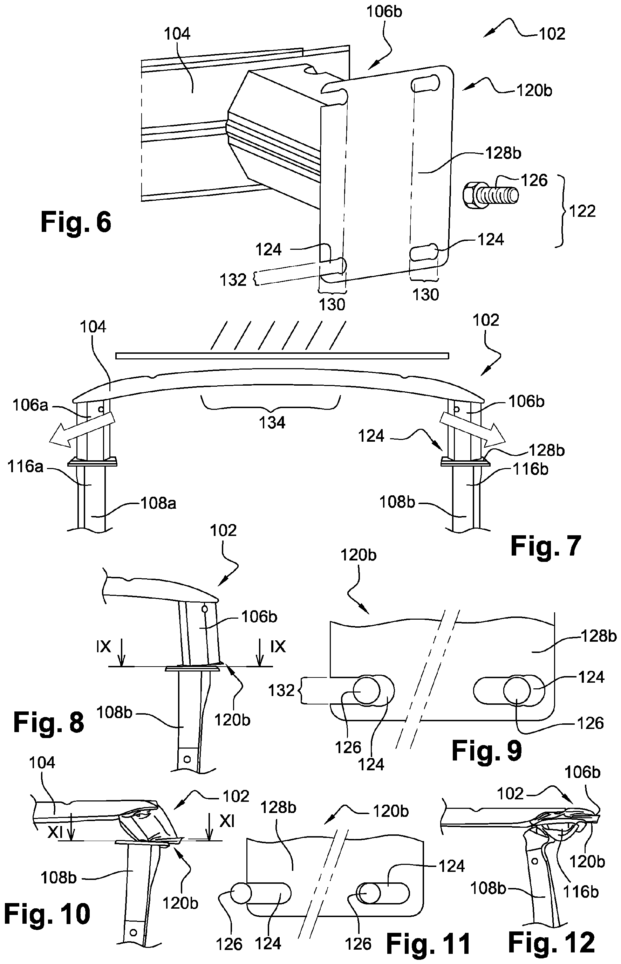

Les figures 6 à 12 illustrent la déformation d'une structure avant 102 d'un véhicule automobile conforme à l'invention, lors d'un choc avant avec recouvrement total ou essentiellement totale.

La figure 6 est une vue de trois quarts arrières du profilé déformable droit 106b de la structure avant 102 du véhicule conforme à l'invention. Le profilé déformable 106b est représenté fixé à la poutre transversale 104. Les moyens de fixation 122 du profilé déformable 106b au profilé structurel correspondant (non représenté) sont configurés pour permettre un déplacement transversal vers l'extérieur de l'extrémité arrière 120b dudit profilé déformable 106b par rapport au profilé structurel, en cas d'impact sur la poutre galbée. Ce déplacement est destiné à engendrer une déformation en flexion latérale, vers l'extérieur, de l'extrémité avant du profilé structurel correspondant ; ce déplacement sera vu en détail plus bas.

Les moyens de fixation 122 du profilé déformable 106b comprennent un ou plusieurs orifices oblongs 124 orientés selon une direction transversale et une vis 126 engageant ledit orifice 124 ou chacun desdits orifices, respectivement. Dans un mode préféré de réalisation, le profilé déformable 106b comprend une platine de fixation 128b, l'orifice oblong 124 ou au moins un des orifices oblongs 124 étant réalisé dans cette platine de fixation 128b. Dans un mode préféré de l'invention, chacun des orifices de fixation 124 réalisé dans la platine 128b peut être un orifice oblong.

L'orifice oblong 124 ou au moins l'un des orifices oblongs peut être situé en bordure 130 de la platine, à une distance de chacun des bords de la platine de moins de 5 % de la plus grande distance de la platine 128b. Au moins un des orifices oblongs peut être débouchant. Dans un mode préféré de réalisation, la platine 128b comprend 4 orifices de fixation oblongs, les 2 orifices situés du côté intérieur du véhicule étant débouchant sur la bordure de la platine.

L'orifice oblong peut avoir une longueur comprise entre 1,5 et 3 fois le diamètre de la vis de fixation 124. Dans un mode préféré de l'invention, la vis de fixation 126 peut être d'un diamètre compris entre 6mm et 10mm, l'orifice oblong 124 peut avoir une longueur comprise entre 9mm et 30mm. L'orifice oblong 124 peut comprendre une portion de section 132 inférieure au diamètre de la vis de fixation 126, ladite portion s'étendant sur au moins 30%, préférentiellement au moins 50% de la longueur de l'orifice oblong. La portion de section inférieure est avantageusement située du côté de l'orifice oblong qui correspond au côté intérieur du véhicule.

La figure 7 est une vue de dessus de la structure avant 102 conforme à l'invention, elle est en position face à une paroi de choc frontal à recouvrement total. On peut voir la poutre transversale 104, les profilés déformables (106a, 106b) ainsi que les portions avant (116a, 116b) des profilés structurels longitudinaux (108a, 108b).

Le profilé déformable 106b, destiné à se déplacer, est représenté à droite sur l'image; l'autre 106a des deux profilés déformables (106a, 106b) est vierge de moyens de fixation conforme à l'invention. Cet autre profilé 106a est préférentiellement du côté conducteur du véhicule.

Le profilé déformable 106b et le profilé structurel 108b correspondant comprennent chacun une platine de fixation 128b, l'orifice oblong 124 ou au moins un des orifices oblongs 124 étant réalisé dans l'une ou au moins l'une desdites platines. Les orifices oblongs peuvent être réalisés dans la platine du profilé structurel ; dans un mode préféré de réalisation, ils sont exclusivement réalisés dans la platine de fixation du profilé déformable.

Des vis de fixation (représentées par des trais d'axe) sont engagées dans les orifices de fixation 124 des platines 128b. La vis ou chacune des vis engageant le ou chacun des orifices oblongs 124 peut être d'un diamètre compris entre 6mm et 10mm ; la vis ou chacune de ces vis est serrée selon un couple de serrage de manière à permettre le déplacement du profilé déformable 106b au cours de la déformation de la poutre transversale galbée 104 ; ce couple de serrage peut être compris entre 20Nm et 40Nm. Dans un mode de réalisation, une pièce supplémentaire (non représentée) peut être située en interface entre les platines de fixation 128b des profilés déformable 106b et structurel 108b. Cette pièce peut être un support de traverse de façade avant du véhicule.

La figure 7 présente la poutre transversale 104 avec une partie centrale 134 galbée dépassant longitudinalement ses parties latérales d'au moins 20mm. Elles peuvent dépasser de 40mm, voire de 60mm ou même 80mm. Des flèches orientées vers l'extérieur de la structure 102 illustrent les efforts latéraux transmis dans la structure en cas de choc avant, lors du dégalbage de la poutre transversale.

Les figures 8 et 10 sont des vues du profilé déformable droit 106b de la structure avant 102 de la figure 7 selon un mode préféré de réalisation. Les vues illustrent le début et la fin, respectivement, du déplacement de l'extrémité arrière 120b du profilé déformable 106b par rapport au profilé structurel 108b lors de l'impact de la structure 102 contre la paroi à recouvrement total vue en relation avec la figure précédente.

Les figures 9 et 11 sont des vues en coupe de la platine 128b du profilé déformable 106b à deux différents stades de son déplacement.

La figure 8 est une vue du profilé déformable 106b droit de la structure de la figure 7 au stade de déformation intermédiaire du véhicule. On peut voir le déplacement transversal vers l'extérieur de l'extrémité arrière 120b du profilé 106b par rapport au profilé structurel 108b.

La figure 9 est une vue en coupe de la platine 128b du profilé déformable 106b au stade de déformation intermédiaire décrit en relation avec la figure 8. Deux orifices de fixation 124 oblongs sont représentés avec une vis de fixation 126 engagée dans chacun d'eux. Les orifices oblongs 124 comprennent en l'occurrence une portion de section inférieure 132 au diamètre de la vis. On peut observer la déformation de la portion 132 de l'orifice oblong de section inférieure au niveau de la vis de fixation 126. La déformation locale de la platine est intéressante en ce qu'elle permet de faciliter la réalisation de la structure avant, en particulier en ce qui concerne l'ajustement du seuil d'effort transversal à partir duquel la platine 128b du profilé déformable 106b est destinée à se déplacer

La figure 10 est une vue du profilé déformable droit 106b de la structure 102 de la figure 7 en cours de déformation. On peut voir le déplacement transversal vers l'extérieur de l'extrémité arrière 120b du profilé déformable 106b par rapport au profilé structurel 108b. Ce déplacement est bien plus prononcé que celui présenté en relation avec la figure 8. Le profilé déformable 106b est présenté en partie comprimé dans la direction longitudinale. La poutre transversale 104 peut ne plus être galbée à ce stade de la déformation ; la partie centrale de la poutre originellement galbée, peut se trouver dans le même plan longitudinal que ses extrémités latérales. Le déplacement de l'extrémité arrière 120b du profilé déformable 106b vise à libérer la tension, vue en relation avec la figure 5, de la structure avant 102 par rupture de façon "programmée" de la fixation entre le profilé déformable droit 106b et le profilé structurel 108b.

La figure 11 est une vue en coupe de la platine 128b du profilé déformable 106b au stade de déformation intermédiaire décrit en relation avec la figure 10. La vis 126 engagée dans l'orifice oblong 124 débouchant sur la bordure de la platine 128b peut se trouver à l'extérieur de la platine 128 à ce stade du déplacement de l'extrémité arrière du profilé. L'autre vis 126, à droite sur l'image, peut se trouver en butée de l'orifice oblong 124 correspondant; elle peut, à ce stade, être sectionnée par le déplacement de la platine 128b.

La figure 12 est une vue du profilé structurel longitudinal droit 108b en fin de déformation de la structure 102 lors d'un choc frontal à recouvrement total conforme à la figure 7. La portion avant 116b du profilé structurel longitudinal droit s'est déformée en cisaillement grâce à l'effort décalé vers l'extérieur exercé par le profilé déformable 106b. Cette image montre bien la déformation avantageuse de la portion avant 116b, dans le cadre d'un tel choc, apte à absorber davantage d'énergie.

En l'absence d'orifices oblongs comme au côté droit, la portion avant du profilé structurel gauche se déforme essentiellement par « bottelage » comme à la figure 4. Cette compression en ligne présente des caractéristiques de décélération plus forte que la déformation désaxée du profilé droit. Cela signifie qu'en cas de choc frontal avec recouvrement partiel, comme illustré à la figure 1, le côté gauche de la structure conserve une capacité d'absorption d'énergie apte à remplir les conditions du test. Seule la capacité du côté droit se voit modifiée par la présence du ou des orifices oblongs de manière à limiter les décélérations lors d'un choc frontal à recouvrement total.

## Revendications

1. Structure avant (102) de véhicule automobile comprenant :
- deux profilés structurels longitudinaux (108a, 108b) s'étendant de manière essentiellement parallèle à l'avant du véhicule ;
- deux profilés déformables (106a, 106b) s'étendant, respectivement, dans le prolongement avant des profilés structurels (108a, 108b) et fixés à leur extrémité avant via des moyens de fixation ;
- une poutre transversale galbée (104) fixée aux extrémités avant des profilés déformables (106a, 106b) ;
les moyens de fixation (122) d'un des profilés déformables (106b) au profilé structurel (108b) correspondant étant configurés pour permettre un déplacement transversal, vers l'extérieur, de l'extrémité arrière (120b) dudit profilé déformable (106b) par rapport à l'extrémité avant du profilé structurel (108b), en cas d'impact sur la poutre galbée (104), de manière à engendrer une déformation latérale, vers l'extérieur, de l'extrémité avant (116b) du profilé structurel (108b) correspondant, **caractérisée en ce que** les moyens de fixation (122) du profilé déformable (106b) destiné à se déplacer par rapport au profilé structurel (108b) correspondant comprennent un ou plusieurs orifices oblongs (124) orientés selon une direction transversale et une vis (126) engageant ledit orifice (124) ou chacun desdits orifices (124), respectivement.

2. Structure avant (102) selon la revendication 1, **caractérisée en ce que** la ou chacune des vis (126) engageant le ou chacun des orifices oblongs (124) est destinée à être serrée selon un couple de serrage tel que le déplacement de l'extrémité arrière (120b) du profilé déformable (106b) se produise au cours de la déformation de la poutre transversale galbée (104).

3. Structure avant (102) selon l'une des revendications 1 et 2, **caractérisée en ce que** le profilé déformable (106b) destiné à se déplacer et le profilé structurel correspondant (108b) comprennent, chacun, une platine de fixation (128b), l'orifice oblong (124) ou au moins un des orifices oblongs (124) étant réalisé dans au moins une desdites platines de fixation (128b), au moins une desdites platines de fixation (128b) étant préférentiellement en aluminium.

4. Structure avant (102) selon la revendication 3, **caractérisée en ce qu'**elle comprend, en outre, une pièce disposée entre les platines de fixation (128b), ladite pièce étant préférentiellement un support de traverse de façade.

5. Structure avant (102) selon l'une des revendications 3 et 4, **caractérisée en ce que** l'orifice oblong (124) ou au moins un des orifices oblong (124) est situé en bordure (130) de la platine (128b), à une distance de ladite bordure (130) de moins de 5% de la plus grande dimension de la platine (128), au moins un des orifices oblongs (124) étant débouchant sur ladite bordure de la platine.

6. Structure avant (102) selon l'une des revendications 1 à 5, **caractérisée en ce que** la longueur de l'orifice oblong (124) est comprise entre 1,5 et 3 fois le diamètre de la vis de fixation (126).

7. Structure avant (102) selon l'une des revendications 1 à 6, **caractérisée en ce que** l'autre (106a) des deux profilés déformables (106a, 106b) est vierge de moyens de fixation configurés pour permettre un déplacement transversal vers l'extérieur dudit autre profilé (106a) par rapport au profilé structurel correspondant, ledit autre profilé (106a) étant préférentiellement du côté conducteur du véhicule.

8. Structure avant (102) selon l'une des revendications 1 à 7, **caractérisée en ce que** l'orifice oblong (124) comprend une portion de section (132) inférieure au diamètre de la vis de fixation (126), ladite portion (132) s'étendant sur au moins 30%, préférentiellement au moins 50%, de la longueur de l'orifice oblong (124), et étant avantageusement située du côté de l'orifice oblong qui correspond au côté intérieur du véhicule.

9. Véhicule automobile, **caractérisé en ce qu'**il comprend une structure avant (102) conforme à l'une des revendications 1 à 8.

## Patentansprüche

1. Frontstruktur (102) eines Kraftfahrzeugs, die Folgendes umfasst:
- zwei Strukturlängsprofile (108a, 108b), die sich im Wesentlichen parallel zu der Frontseite des Fahrzeugs erstrecken;
- zwei verformbare Profile (106a, 106b), die sich jeweils in der vorderen Verlängerung der Strukturprofile (108a, 108b) erstrecken und an ihrem Frontende über Befestigungsmittel befestigt sind;
- einen gewölbten Querträger (104), der an den Frontenden der verformbaren Profile (106a, 106b) befestigt ist;
wobei die Befestigungsmittel (122) eines der verformbaren Profile (106b) an dem entsprechenden Strukturprofil (108b) konfiguriert sind, um eine Querverlagerung nach außen von dem hinteren Ende (120b) des verformbaren Profils (106b) in Bezug auf das Frontende des Strukturprofils (108b) bei einem Aufprall auf dem gewölbten Träger (104) derart zu erlauben, dass eine seitliche Verformung nach außen des Frontendes (116b) des entsprechenden Strukturprofils (108b) bewirkt wird, **dadurch gekennzeichnet, dass** die Befestigungsmittel (122) des verformbaren Profils (106b), das dazu bestimmt ist, sich in Bezug auf das entsprechende Strukturprofil (108b) zu verlagern, eine oder mehr längliche Öffnungen (124) umfassen, die entlang einer Querrichtung ausgerichtet sind, und eine Schraube (126), die jeweils in die Öffnung (124) oder eine der Öffnungen (124) eingreift.

2. Frontstruktur (102) nach Anspruch 1, **dadurch gekennzeichnet, dass** die oder jede Schraube (126), die in die oder jede längliche Öffnung (124) eingreift, dazu bestimmt ist, gemäß einem Anziehdrehmoment derart angezogen zu werden, dass die Verlagerung des hinteren Endes (120b) des verformbaren Profils (106b) im Laufe der Verformung des gewölbten Querträgers (104) auftritt.

3. Frontstruktur (102) nach einem der Ansprüche 1 und 2, **dadurch gekennzeichnet, dass** das verformbare Profil (106b), das dazu bestimmt ist, sich zu verlagern, und das entsprechende Strukturprofil (108b) jeweils eine Befestigungsplatte (128b) umfassen, wobei die längliche Öffnung (124) oder mindestens eine der länglichen Öffnungen (124) in mindestens einer der Befestigungsplatten (128b) hergestellt ist, wobei mindestens eine der Befestigungsplatten (128b) bevorzugt aus Aluminium besteht.

4. Frontstruktur (102) nach Anspruch 3, **dadurch gekennzeichnet, dass** sie außerdem mindestens ein Teil umfasst, das zwischen den Befestigungsplatten (128b) angeordnet ist, wobei das Teil bevorzugt eine Fassadenträgerstütze ist.

5. Frontstruktur (102) nach einem der Ansprüche 3 und 4, **dadurch gekennzeichnet, dass** die längliche Öffnung (124) oder mindestens eine der länglichen Öffnungen (124) am Rand (130) der Platte (128b) in einem Abstand von dem Rand (130) von mindestens 5 % des größten Maßes der Platte (128) liegt, wobei mindestens eine der länglichen Öffnungen (124) auf dem Rand der Platte mündet.

6. Frontstruktur (102) nach einem der Ansprüche 1 bis 5, **dadurch gekennzeichnet, dass** die Länge der länglichen Öffnung (124) zwischen 1,5 und 3 Mal dem Durchmesser der Befestigungsschraube (126) liegt.

7. Frontstruktur (102) nach einem der Ansprüche 1 bis 6, **dadurch gekennzeichnet, dass** das andere (106a) der zwei verformbaren Profile (106a, 106b) keine Befestigungsmittel aufweist, die konfiguriert sind, um eine Querverlagerung zum Äußeren des anderen Profils (106a) in Bezug auf das entsprechende Strukturprofil zu erlauben, wobei das andere Profil (106a) bevorzugt auf der Fahrerseite des Fahrzeugs liegt.

8. Frontstruktur (102) nach einem der Ansprüche 1 bis 7, **dadurch gekennzeichnet, dass** diese längliche Öffnung (124) einen Abschnitt mit Schnitt (132) kleiner als der Durchmesser der Befestigungsschraube (126) umfasst, wobei sich der Abschnitt (132) auf mindestens 30 %, bevorzugt mindestens 50 % der Länge der länglichen Öffnung (124) erstreckt und vorteilhafterweise auf der Seite der länglichen Öffnung liegt, die der Innenseite des Fahrzeugs entspricht.

9. Kraftfahrzeug, **dadurch gekennzeichnet, dass** es eine Frontstruktur (102) gemäß einem der Ansprüche 1 bis 8 umfasst.

## Claims

1. A front structure (102) of a motor vehicle including:
- two longitudinal structural profiles (108a, 108b) extending essentially parallel to the front of the vehicle;
- two deformable profiles (106a, 106b) extending, respectively, in the front extension of the structural profiles (108a, 108b) and attached at their front end via attachment means;
- a curved transverse beam (104) attached to the front ends of the deformable profiles (106a, 106b);
the attachment means (122) of one of the deformable profiles (106b) to the corresponding structural profile (108b) being configured so as to permit a transverse displacement, towards the exterior, of the rear end (120b) of said deformable profile (106b) with respect to the front end of the structural profile (108b), in the event of impact on the curved beam (104), so as to create a lateral deformation, towards the exterior, of the front end (116b) of the corresponding structural profile (108b), **characterized in that** the attachment means (122) of the deformable profile (106b) intended to move with respect to the corresponding structural profile (108b) include one or more oblong orifices (124) oriented along a transverse direction and a screw (126) engaging said orifice (124) or each of said orifices (124), respectively.

2. The front structure (102) according to Claim 1, **characterized in that** the or each of the screws (126) engaging the or each of the oblong orifices (124) is intended to be tightened according to a tightening torque such that the displacement of the rear end (120b) of the deformable profile (106b) occurs during the deformation of the curved transverse beam (104).

3. The front structure (102) according to one of Claims 1 and 2, **characterized in that** the deformable profile (106b) intended to move, and the corresponding structural profile (108b) each include an attachment plate (128b), the oblong orifice (124) or at least one of the oblong orifices (124) being formed in at least one of said attachment plates (128b), at least one of said attachment plates (128b) being preferably made of aluminium.

4. The front structure (102) according to Claim 3, **characterized in that** it includes, furthermore, a part disposed between the attachment plates (128b), said part being preferably a front cross-member support.

5. The front structure (102) according to one of Claims 3 and 4, **characterized in that** the oblong orifice (124) or at least one of the oblong orifices (124) is situated at the edge (130) of the plate (128b), at a distance from said edge (130) of at least 5% of the greatest dimension of the plate (128), at least one of the oblong orifices (124) being opening onto said edge of the plate.

6. The front structure (102) according to one of Claims 1 to 5, **characterized in that** the length of the oblong orifice (124) is comprised between 1.5 and 3 times the diameter of the attachment screw (126).

7. The front structure (102) according to one of Claims 1 to 6, **characterized in that** the other (106a) of the two deformable profiles (106a, 106b) is free of attachment means configured to permit a transverse displacement towards the exterior of said other profile (106a) with respect to the corresponding structural profile, said other profile (106a) being preferably on the driver's side of the vehicle.

8. The front structure (102) according to one of Claims 1 to 7, **characterized in that** the oblong orifice (124) includes a portion of section (132) smaller than the diameter of the attachment screw (126), said portion (132) extending over at least 30%, preferably at least 50%, of the length of the oblong orifice (124), and being advantageously situated on the side of the oblong orifice which corresponds to the interior side of the vehicle.

9. A motor vehicle, **characterized in that** it includes a front structure (102) according to one of Claims 1 to 8.
